(19) **Europäisches Patentamt / European Patent Office / Office européen des brevets**

(11) **EP 2 939 544 B1**

(12) **EUROPEAN PATENT SPECIFICATION**

(45) Date of publication and mention of the grant of the patent:
**17.07.2019 Bulletin 2019/29**

(21) Application number: **13867472.6**

(22) Date of filing: **25.12.2013**

(51) Int Cl.:
**A23F 5/10** *(2006.01)*     **A23F 5/16** *(2006.01)*

(86) International application number:
**PCT/JP2013/084602**

(87) International publication number:
**WO 2014/104070 (03.07.2014 Gazette 2014/27)**

(54) **METHOD FOR PRODUCING ROASTED COFFEE BEANS**

VERFAHREN ZUR HERSTELLUNG VON GERÖSTETEN KAFFEEBOHNEN

PROCÉDÉ DE PRODUCTION DE GRAINS DE CAFÉ TORRÉFIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2012 JP 2012288976**

(43) Date of publication of application:
**04.11.2015 Bulletin 2015/45**

(73) Proprietor: **Kao Corporation**
**Chuo-ku**
**Tokyo 103-8210 (JP)**

(72) Inventor: **KUSAURA, Tatsuya**
**Tokyo 131-8501 (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| EP-A- 0 755 631 | EP-A1- 1 654 935 |
| EP-A1- 2 233 012 | WO-A1-2005/011396 |
| WO-A1-2009/081937 | WO-A1-2011/122660 |
| WO-A1-2012/121239 | JP-A- 2000 342 182 |
| US-A- 3 132 947 | US-A- 3 244 532 |
| US-A- 3 620 758 | US-A1- 2010 323 082 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Field of the Invention]

The present invention relates to a method for producing roasted coffee beans.

[Background of the Invention]

Coffee beverages contain chlorogenic acids, one of polyphenols, such as chlorogenic acid, coffeic acid and ferulic acid. The chlorogenic acids are known to have excellent physiological activities such as an antihypertensive effect. However, when green coffee beans are roasted, hydroxyhydroquinone is inevitably generated. The hydroxyhydroquinone is reported to inhibit physiological actions of chlorogenic acids. Accordingly, to sufficiently excert the physiological actions of chlorogenic acids, it is advantageous to use roasted coffee beans containing a large amount of chlorogenic acids and a reduced amount of hydroxyhydroquinone. Then, as a method for producing roasted coffee beans having a reduced amount of hydroxyhydroquinone, for example, a method in which starting material roasted coffee beans (80 to 150°C under atmospheric pressure) is subjected to a heat treatment at a temperature of 90 to 150°C under vacuum conditions of 6.7 kPa or less, is proposed (Patent Document 1).

Coffee beverages are very popular and favorite tasty beverages and roasted coffee beans useful as a starting material for a coffee beverage having good taste and flavor have been desired. For example, as a treatment method of roasted coffee beans for reducing the content of sourness components of roasted coffee beans and improving its extraction rate, thereby successfully extracting excellent flavor intrinsic to coffee beans, a water vapor treatment method in which water vapor is supplied to roasted coffee beans under aeration, is proposed (Patent Document 2). As a method for producing roasted coffee beans, which are useful as a starting material for a coffee beverage suppressed in unpleasant taste, a method in which starting material roasted coffee beans having an L value of 30 to 50 are placed in an airtight container and the roasted coffee beans is subjected to a heat treatment at from 100 to 160°C is proposed (Patent Document 3). Similarly, a method in which the starting material roasted coffee beans having an L value of 10 to 40 are subjected to a heat treatment at from 160 to 190°C is proposed (Patent Document 4).

[Citation List]

(Patent Document 1) JP-A-2011-055716
(Patent Document 2) WO-A 2005/011396 (corresponding to EP 1 654 935)
(Patent Document 3) JP-A-2012-183035
(Patent Document 4) WO-A 2011/122660

US 3 244 532, US 3 132 947 and US 3 620 758 describe procedures involving the steam distillation of coffee beans in order to isolate volatile aromas, isolation of soluble coffee solids from the coffee beans, and combination of the aromas and the soluble coffee solids in order to prepare a soluble coffee composition.

EP 0 755 631 is directed to a method for improving the quality of green coffee by treatment with steam and water.

EP 2 233 012 concerns a method for treating roasted coffee beans, which includes a sugar-enrichment step and a water vapor treatment step.

[Summary of the Invention]

The present invention provides a method for producing roasted coffee beans, comprising placing starting material roasted coffee beans in an airtight container, sealing the container, the atmosphere in the container either being atmospheric air or an inert gas, and subjecting the roasted coffee beans to a heat treatment at from 100 to 160°C under humidified conditions. The humidified conditions are characterized by either of the following (1) to (3):

(1) Water is added in an amount as a mass ratio of from 0.001 to 0.06 relative to the starting material roasted coffee beans to humidify an interior of the airtight container.
(2) A water vapor partial pressure in the airtight container at a heating condition is 10 kPa or more and 300 kPa or less.
(3) An amount of increase in relative humidity in the airtight container at a heating condition is 5% or more and 95% or less.

[Detailed Description of the Invention]

Taste and flavor of coffee contains various elements such as bitterness, sourness and sweetness, and these elements are well balanced to produce the taste and flavor of a coffee beverage. In addition, if depth and width of taste are enhanced, the consumer will feel body. Thus, if one of these elements of the coffee taste and flavor is reduced, balance of taste and flavor is disrupted, with the result that the consumer will often feel strangeness and unpleasant taste in the taste and flavor. In addition, the body is difficultly felt from imbalanced coffee taste and flavor. Herein, the "unpleasant taste" used in the specification refers to off-taste remaining after drinking and disrupting original taste and flavor balance of roasted coffee beans.

The present invention relates to a method for producing roasted coffee beans useful as a starting material for a coffee beverage having rich body, suppressed in unpleasant taste and reduced in the amount of hydroxyhydroquinone.

The present inventor surprisingly found that roasted coffee beans useful as a starting material for a coffee beverage having rich body, suppressed in unpleasant taste and reduced in the amount of hydroxyhydroquinone are obtained by subjecting roasted coffee beans placed in an airtight container to a heat treatment at a predetermined temperature under humidified conditions.

According to the present invention, it is possible to efficiently produce roasted coffee beans useful as a starting material for a coffee beverage having rich body, suppressed in unpleasant taste and reduced in the amount of hydroxyhydroquinone, in a simple operation.

The method for producing roasted coffee beans of the present invention includes placing starting material roasted coffee beans in an airtight container and subjecting the roasted coffee beans to a heat treatment at a temperature of from 100 to 160°C under humidified conditions.

The airtight container to be used in the present invention is not particularly limited as long as it shuts out contact with ambient air; examples thereof include a retort pouch, a can and a bottle. Note that the can and bottle are preferably openable and closable by means of a stopple or a lid. Also, the shape and material for the airtight container are not particularly limited; and a pressure-resistant container made of a material which does not change in property by heating is preferable; for example, a metal container and a glass container may be mentioned.

In the production method of the present invention, the interior of an airtight container is humidified in order to subject starting material roasted coffee beans to a heat treatment under humidified conditions.

As a humidification method, for example, a method of humidifying by adding water to the interior of an airtight container is mentioned. More specifically, a method of placing a vessel storing water in an airtight container; a method of placing a water-absorbing material in an airtight container and adding water to the water-absorbing material; a method of placing a water-absorbing material having previously-contained water in an airtight container; and a method of adding water to starting material roasted coffee beans, can be mentioned. The water-absorbing material is not particularly limited as long as it has water absorbability and does not change in property by heating; for example, cloth, nonwoven cloth and waste paper are mentioned.

An amount of water added, in other words, a mass ratio of water to starting material roasted coffee beans, in view of reducing the amount of hydroxyhydroquinone and enhancing body, is 0.001 or more, preferably 0.002 or more, more preferably 0.003 or more, more preferably 0.004 or more, more preferably 0.006 or more, more preferably 0.008 or more and even more preferably 0.01 or more; and, in view of taste and flavor balance and sharpness of sourness, the mass ratio is 0.06 or less, preferably 0.05 or less and even more preferably 0.04 or less. The amount of water added, i.e., the mass ratio of water to starting material roasted coffee beans, is from 0.001 to 0.06, preferably from 0.002 to 0.06, more preferably from 0.003 to 0.06, more preferably from 0.004 to 0.05, more preferably from 0.006 to 0.05, more preferably from 0.008 to 0.04 and even more preferably from 0.01 to 0.04.

Examples of kinds of starting material roasted coffee beans to be used in the present invention may include *Coffea* Arabica, *Coffea* Robusta and *Coffea* Liberica. Examples of a production region of coffee beans include, but not particularly limited to, Brazil, Colombia, Tanzania, Mocha, Kilimanjaro, Mandheling, Blue Mountain and Guatemala.

The starting material roasted coffee beans can be used singly or as a mixture of two or more. If two or more of starting material roasted coffee beans are used, coffee beans not only different in kind and production region but also different in degree of roast can be used as a mixture.

The starting material roasted coffee beans having an L value higher than a desired L value of the roasted coffee beans to be obtained by the present invention are preferably used. For example, the L value of starting material roasted coffee beans is preferably higher by 1 or more than a desired L value of the roasted coffee beans, more preferably higher by from 1 to 10. More specifically, when roasted coffee beans having an L value of about 20 are desired, starting material roasted coffee beans having an L value of from 21 to 30 are preferably used. Herein, the "L value" used in the specification is defined as a lightness value of roasted coffee beans measured by a color difference meter, provided that the L value of black is regarded as 0 and the L value of white is regarded as 100. As the color difference meter, for example, spectrophotometer SE2000 (manufactured by Nippon Denshoku Industries Co., Ltd.) can be used.

The L value of starting material roasted coffee beans to be used in the present invention, in view of taste and flavor, is preferably 10 or more, more preferably 12 or more and even more preferably 14 or more; and preferably 40 or less, more preferably 38 or less and even more preferably 36 or less. The L value of starting material roasted coffee beans preferably falls within the range of from 10 to 40, more preferably from 12 to 38 and even more preferably from 14 to 36. Note that when two kinds or more of starting material roasted coffee beans different in degree of roast are used, they are appropriately used in combination such that the average L value of them falls within the above range. The average L value is determined as the sum of products, which are obtained multiplying the L value of starting material roasted coffee beans to be used by the content ratio of the starting material roasted coffee beans.

The starting material roasted coffee beans may be roasted green coffee beans or commercially available product.

A method of roasting green coffee beans is not particularly limited and a known method can be appropriately selected. For example, the roasting temperature is preferably from 180 to 300°C, more preferably from 190 to 280°C and even more preferably from 200 to 280°C. The heating time can be appropriately set so as to obtain a desired degree of roast. Furthermore, examples of roasters which may be used include a roaster for roasting beans kept unmoved, a roaster for roasting beans while transferring and a roaster for roasting beans while stirring or the like. More specifically, a shelf dryer, a conveyer dryer, a rotary-drum dryer and a rotary V-type dryer or the like are mentioned. As a heating system, a direct heating system, a hot-air system, a half-hot air system, a far-infrared ray system, an infrared ray system, a microwave system and a superheated steam system are mentioned.

The starting material roasted coffee beans may be ground or not ground; however, ground starting material roasted coffee beans are preferable in view of reactivity. The size of ground starting material roasted coffee beans can be appropriately selected; however, the roasted coffee beans which pass through a 12-mesh Tyler standard sieve and do not pass through a 115-mesh Tyler standard sieve are preferable.

A method for placing starting material roasted coffee beans in a container is as follows. For example, if a water-absorbing material having water added thereto is placed in an airtight container, roasted coffee beans may be placed so as to be in contact with the water-absorbing material, or may be placed in the container having a partition board such as a mesh, which is provided in order to avoid contact between a water-absorbing material and starting material roasted coffee beans.

At the time of loading starting material roasted coffee beans, when starting material roasted coffee beans are placed in an airtight container, an amount of starting material roasted coffee beans to be loaded is preferably controlled such that a predetermined spatial volume can be left in the container. For example, a ratio of starting material roasted coffee beans (mass (g)) to be placed in the container relative to the internal volume ($cm^3$) of the airtight container is preferably 0.005 $g/cm^3$ or more, more preferably 0.01 $g/cm^3$ or more and even more preferably 0.02 $g/cm^3$ or more; and preferably 0.25 $g/cm^3$ or less, more preferably 0.13 $g/cm^3$ or less, more preferably 0.1 $g/cm^3$ or less and even more preferably less than 0.05 $g/cm^3$. The ratio preferably falls within the range of from 0.005 to 0.25 $g/cm^3$, more preferably from 0.01 to 0.13 $g/cm^3$, more preferably from 0.02 to 0.1 $g/cm^3$ and even more preferably 0.02 $g/cm^3$ or more and less than 0.05 $g/cm^3$.

After starting material roasted coffee beans are placed in a container, the container is sealed. At this time, for the atmosphere in the airtight container, either atmospheric air or an inert gas atmosphere such as nitrogen is employed.

Then, the starting material roasted coffee beans placed in the airtight container is heated.

The heating temperature is, in view of taste and flavor and reducing the amount of hydroxyhydroquinone, 100°C or more, preferably 105°C or more, more preferably 110°C or more, more preferably 115°C or more and even more preferably 120°C or more; and 160°C or less, preferably 155°C or less, more preferably 150°C or less, more preferably 145°C or less and even more preferably 140°C or less. The heating temperature falls within the range of from 100 to 160°C, preferably from 105 to 155°C, more preferably from 110 to 150°C, more preferably from 115 to 145°C and even more preferably from 120 to 140°C. Such range of the heating temperature may also be from 105 to 145°C.

When starting material roasted coffee beans are heated, taking the amount of water added into consideration, the heating temperature is preferably controlled such that water vapor partial pressure derived from water, which is added to the airtight container at a heating condition and the relative humidity therein satisfy the following values.

The water vapor partial pressure in the airtight container at a heating condition is, in view of reducing the amount of hydroxyhydroquinone, 10 kPa or more, preferably 14 kPa or more, more preferably 18 kPa or more, more preferably 25 kPa or more, more preferably 40 kPa or more and even more preferably 60 kPa or more; and, in view of taste and flavor, the water vapor partial pressure is 300 kPa or less, preferably 250 kPa or less, more preferably 210 kPa or less, more preferably 200 kPa or less and even more preferably 195 kPa or less. The water vapor partial pressure falls within the range of from 10 to 300 kPa, preferably from 14 to 250 kPa, more preferably from 18 to 210 kPa, more preferably from 25 to 200 kPa, more preferably from 40 to 195 kPa and even more preferably from 60 to 195 kPa.

More, an amount of increase in the relative humidity in the airtight container at a heating condition is, in view of reducing the amount of hydroxyhydroquinone, 5% or more, preferably 6% or more, more preferably 7% or more, more preferably 10% or more, more preferably 15% or more and even more preferably 20% or more. The relative humidity is, in view of taste and flavor, 95% or less, preferably 90% or less and even more preferably 85% or less. The increase amount of the relative humidity falls within the range of from 5 to 95%, preferably from 6 to 95%, more preferably from 7 to 95%, more preferably from 10 to 95%, more preferably from 15 to 90% and even more preferably from 20 to 85%. The term "increase amount of relative humidity" used in the specification is based on a reference relative humidity, which is obtained in the airtight container when roasted coffee beans alone are placed in the airtight container and heated at the predetermined temperature without humidifying; more specifically, it refers to an amount of increase in relative humidity in an airtight container when roasted coffee beans are placed and heated at a predetermined temperature under humidified conditions, relative to the reference relative humidity. Note that since roasted coffee beans virtually contain no water and the amount of water vapor originally contained in an airtight container is reduced to extremely low amount when it is heated to a predetermined temperature, the relative humidity in the airtight container when roasted coffee beans alone are placed in the airtight container and heated at a predetermined temperature without humidifying may be regarded as virtually 0%.

The heating time is, in view of taste and flavor and reducing the amount of hydroxyhydroquinone, preferably 0.5 hours or more and even more preferably 1 hour or more; and, in view of productivity, the heating time is preferably 4 hours or less, more preferably 3 hours or less and even more preferably 2 hours or less. The heating time preferably falls within the range of from 0.5 to 4 hours, more preferably from 1 to 3 hours and even more preferably from 1 to 2 hours. The heating time herein is specified as the lapse time after an airtight container is charged into a heating apparatus in the case where the heating apparatus is previously heated to a desired temperature. Alternatively, in the case where the temperature is raised after an airtight container is charged into the heating apparatus, the heating time is specified as the lapse time after the temperature reaches to a desired temperature.

As the heating apparatus, for example, an autoclave and a drier to which heat can be applied may be used.

After the heat treatment, the airtight container is taken out from the heating apparatus and preferably cooled to from 0 to 100°C and more preferably to from 10 to 60°C, within 30 minutes. After cooling, the airtight container is opened and the roasted coffee beans are taken out from the container to obtain the roasted coffee beans of the present invention.

In the roasted coffee beans thus obtained, the hydroxyhydroquinone content is sufficiently reduced compared to that usually contained in roasted coffee beans. More specifically, the content of hydroxyhydroquinone per kg of roasted coffee beans is, in view of further suppressing unpleasant taste and enhancing body, preferably 40 mg or less, more preferably 35 mg or less, more preferably 30 mg or less and even more preferably 25 mg or less. The content of hydroxyhydroquinone may be 0 mg; however, in view of productivity, the content is preferably 0.1 mg or more, more preferably 0.5 mg or more and even more preferably 1 mg or more. The content of hydroxyhydroquinone per kg of roasted coffee beans preferably falls within the range of from 0.1 to 40 mg, more preferably from 0.5 to 35 mg, more preferably from 1 to 30 mg and even more preferably from 1 to 25 mg.

The roasted coffee beans obtained may have the following features.

(1) The content of hydroquinone per kg of roasted coffee beans is, in view of further suppressing unpleasant taste and enhancing body, preferably 10 mg or more, more preferably 15 mg or more and even more preferably 20 mg or more; and in view of taste and flavor balance, the content of hydroquinone is preferably 50 mg or less and even more preferably 45 mg or less. The content of hydroquinone per kg of roasted coffee beans preferably falls within the range of from 10 to 50 mg, more preferably from 15 to 45 mg and even more preferably from 20 to 45 mg.

(2) The mass ratio of (A) hydroquinone and (B) hydroxyhydroquinone, [(B)/(A)], is, in view of further suppressing unpleasant taste and enhancing body, preferably 3 or less, more preferably 2 or less and even more preferably 1 or less. The mass ratio [(B)/(A)] may be 0; however, in view of productivity, the mass ratio [(B)/(A)] is preferably 0.01 or more, more preferably 0.05 or more and even more preferably 0.1 or more. The mass ratio [(B)/(A)] preferably falls within the range of from 0.01 to 3, more preferably from 0.05 to 2 and even more preferably from 0.1 to 1.

(3) The content of chlorogenic acids in roasted coffee beans is, in view of enhancing physiological effects, preferably 0.5 % by mass or more, more preferably 0.6 % by mass or more and even more preferably 0.7 % by mass or more; and in view of taste and flavor, the content of chlorogenic acids is preferably 7 % by mass or less, more preferably 6.5 % by mass or less and even more preferably 6 % by mass or less. The content of chlorogenic acids in roasted coffee beans preferably falls within the range of from 0.5 to 7 % by mass, more preferably from 0.6 to 6.5 % by mass and even more preferably from 0.7 to 6 % by mass. Herein, the term "chlorogenic acids" used in the specification is a general term of collectively encompassing monocaffeoylquinic acids such as 3-caffeoylquinic acid, 4-caffeoylquinic acid and 5-caffeoylquinic acid; monoferuloylquinic acids such as 3-feruloylquinic acid, 4-feruloylquinic acid and 5-feruloylquinic acid; and dicaffeoylquinic acids such as 3,4-dicaffeoylquinic acid, 3,5-dicaffeoylquinic acid and 4,5-dicaffeoylquinic acid. The amount of chlorogenic acids is defined as the total amount of the above 9 kinds.

Note that "the content of hydroquinone in roasted coffee beans", "the content of hydroxyhydroquinone in roasted coffee beans" and "the content of chlorogenic acid in roasted coffee beans" in the specification are obtained in accordance with the following formulas (i) to (iii) based on the content of hydroquinone, the content of hydroxyhydroquinone and the content of chlorogenic acids in a coffee extract solution obtained from the roasted coffee beans.

(i) The content of hydroquinone in roasted coffee beans (mg/kg) = [the content (mg/kg) of hydroquinone in coffee extract solution] × [mass of coffee extract solution (kg)]/[mass of roasted coffee beans (kg)]

(ii) The content of hydroxyhydroquinone in roasted coffee beans (mg/kg)= [the content (mg/kg) of hydroxyhydroquinone in coffee extract solution] × [mass of coffee extract solution (kg)]/[mass of roasted coffee beans (kg)]

(iii) The content of chlorogenic acids in roasted coffee beans [% by mass] = [the content (g/g) of chlorogenic acids in coffee extract solution] × [mass of coffee extract solution (g)]/[mass of roasted coffee beans (g)] × 100

Note that the analysis conditions of a coffee extract solution are as follows. First, roasted coffee beans are ground. Then, the ground roasted coffee beans which pass through a 12-mesh Tyler standard sieve and do not pass through Tyler standard sieve 115 meshes are collected. Subsequently, to the ground roasted coffee beans (0.5 g), 80 g of extraction water (a solution of 1 g of phosphoric acid and 0.03 g of 1-hydroxyethane-1,1-diphosphonic acid (HEDPO) in 1 L of ion-exchanged water) is added and the extraction is performed by immersing for 10 minutes while maintaining the temperature of from 95 to 99°C. Then, the supernatant of the coffee extract solution is collected and subjected to the method described in Examples described later to analyze the content of hydroquinone, the content of hydroxyhydroquinone and the content of chlorogenic acids.

[Examples]

1. Analysis of chlorogenic acids (CGA)

HPLC was used as an analyzer. The model numbers of component units in the analyzer are as follows:

UV-VIS detector: L-2420 (Hitachi High-Technologies Corporation),
Column oven: L-2300 (Hitachi High-Technologies Corporation),
Pump: L-2130 (Hitachi High-Technologies Corporation),
Autosampler: L-2200 (Hitachi High-Technologies Corporation),
Column: Cadenza CD-C18, 4.6 mm (inner diameter) × 150 mm (length), particle size: 3 $\mu$m (Imtakt Corp.).

Analysis conditions are as follows:

Sample injection volume: 10 $\mu$L,
Flow rate: 1.0 mL/min,
Predetermined wavelength of UV-VIS detector: 325 nm,

Predetermined temperature of column oven: 35°C,
Eluent A: 5 (V/V) % acetonitrile solution containing 0.05 M acetic acid, 0.1 mM HEDPO and 10 mM sodium acetate,
Eluent B: acetonitrile.

Concentration gradient conditions

| Time | Eluent A | Eluent B |
|---|---|---|
| 0.0 min. | 100% | 0% |
| 10.0 min. | 100% | 0% |
| 15.0 min. | 95% | 5% |
| 20.0 min. | 95% | 5% |
| 22.0 min. | 92% | 8% |
| 50.0 min. | 92% | 8% |
| 52.0 min. | 10% | 90% |
| 60.0 min. | 10% | 90% |
| 60.1 min. | 100% | 0% |
| 70.0 min. | 100% | 0% |

In HPLC, a coffee extract solution was filtrated by a membrane filter (GL chromatodisk 25A, pore size 0.45 $\mu$m, GL Sciences Inc.) and then subjected to analysis. Retention time of chlorogenic acids (unit: minute)

monocaffeoylquinic acid: 3 peaks at 5.3, 8.8, 11.6

monoferuloylquinic acid: 3 peaks at 13.0, 19.9, 21.0

dicaffeoylquinic acid: 3 peaks at 36.6, 37.4, 44.2.

From area values of the nine chlorogenic acids as obtained herein, the content of chlorogenic acids (% by mass) was determined by using 5-caffeoylquinic acid used as a standard substance.

2. Method for analyzing hydroquinone and hydroxyhydroquinone by an HPLC-electrochemical detector

As an analyzer, a coularray system (model 5600A, manufactured by ESA in the U.S.), which is an HPLC-electrochemical detector (coulometric type) was used. The names and model numbers of the component units of the system are as follows:

Analytical cell: Model 5010, coularray organizer,
Coularray electronics module, software: Model 5600A,
Solvent feeder module: Model 582, gradient mixer,
Autosampler: Model 542, pulse damper,
Degasser: Degasys Ultimate DU3003,
Column oven: 505,
Column: CAPCELL PAK C18 AQ, 4.6 mm (inner diameter) $\times$ 250 mm (length), particle size: 5 $\mu$m (Shiseido Co., Ltd.).

Analysis conditions are as follows:

Sample injection volume: 10 $\mu$L,
Flow rate: 1.0 mL/min,
Voltage application of electrochemical detector: 200 mV,
Predetermined temperature of column oven: 40°C,
Eluent C: 5 (V/V)% methanol solution containing 0.1 (W/V)% phosphoric acid and 0.1 mM 1-hydroxyethane-1,1-diphosphonic acid,
Eluent D: 50 (V/V)% methanol solution containing 0.1 (W/V) % phosphoric acid and 0.1 mM 1-hydroxyethane-1,1-diphosphonic acid.

For preparing Eluent C and D, distilled water for high-performance liquid chromatography (Kanto Chemical Co., Inc.), methanol for high-performance liquid chromatography (Kanto Chemical Co., Inc.), phosphoric acid (guaranteed reagent, Wako Pure Chemical Industries, Ltd.), and 1-hydroxyethane-1,1-diphosphonic acid (60% aqueous solution, Tokyo Kasei Kogyo Co., Ltd.) were used.

| Concentration gradient conditions | | |
|---|---|---|
| Time | Eluent C | Eluent D |
| 0.0 min. | 100% | 0% |
| 10.0 min. | 100% | 0% |
| 10.1 min. | 0% | 100% |
| 20.0 min. | 0% | 100% |
| 20.1 min. | 100% | 0% |
| 50.0 min. | 100% | 0% |

A coffee extract solution was allowed to pass through Bond Elut SCX (packed weight of solid phase charge: 500 mg, reservoir capacity: 3 mL, GL Sciences Inc.). The initial fraction (volume: approximately 0.5 mL) was discarded and other fractions were obtained. Immediately upon filtrating the fractions by a membrane filter (GL chromatodisk 25A, pore size: 0.45 $\mu$m, GL Sciences Inc.), the filtrate was subjected to analysis.

In the analysis performed by the HPLC-electrochemical detector in the aforementioned conditions, the retention time of hydroxyhydroquinone was 6.38 minutes, and the retention time of hydroquinone was 9.2 minutes.

From the peak area values obtained, the content of hydroquinone (mg/kg) and the content of hydroxyhydroquinone (mg/kg) were determined with reference to hydroquinone (Wako Pure Chemical Industries, Ltd.) and hydroxyhydroquinone (Wako Pure Chemical Industries, Ltd.) as standard substances.

3. Measurement of L value

A sample was measured by a color difference meter (spectrophotometer SE2000 manufactured by Nippon Denshoku Industries Co., Ltd.).

4. Sensory evaluation

Coffee extract solution obtained in each of Examples and Comparative Examples was evaluated for unpleasant taste and body by five expert panels in accordance with the following criteria. Thereafter, discussion was made to determine the final score. Furthermore, coffee extract solutions obtained in Examples 9, 10 and 17 were evaluated for sharpness of sourness by five expert panels in accordance with the following criteria. Thereafter, discussion was made to determine the final score.

Evaluation criteria of unpleasant taste

5: No unpleasant taste is sensed
4: Unpleasant taste is slightly sensed
3: Unpleasant taste is rather sensed
2: Unpleasant taste is sensed
1: Unpleasant taste is strongly sensed

Evaluation criteria of body

5: Body is strongly sensed
4: Body is sensed
3: Body is slightly sensed
2: No body is sensed

Evaluation criteria of sharpness of sourness

5: Sharpness of sourness is satisfactory
4: Sharpness of sourness is rather satisfactory
3: Sharpness of sourness is between rather satisfactory evaluated as score 4 and slightly poor evaluated as score 2
2: Sharpness of sourness is slightly poor
1: Sharpness of sourness is poor

Example 1

In an SOT can (stay-on-tab can) having an internal volume of 190 $cm^3$, cloth was laid. To the cloth, ion exchange water (0.02 g) was added. Then, starting material roasted coffee beans having an L value of 17.5 were ground by a grinder (Wonder Blender WB-1, Osaka Chemical Co., Ltd., hereinafter the same). The ground coffee beans, which passed through a 12-mesh Tyler standard sieve and did not pass through a 115-mesh Tyler standard sieve, were collected. The ground coffee beans thus obtained (5 g (bulk volume: 10 $cm^3$)) were placed in the SOT can, and the opening portion was sealed. Thereafter, the SOT can was charged into an autoclave (HI Clave, HVA-85, Hirayama Manufacturing Corporation, hereinafter the same) and a heat treatment was performed at 125°C for one hour under pressure of 0.145 MPa in terms of a gauge pressure to obtain roasted coffee beans having an L value of 16.0.
Subsequently, to the obtained roasted coffee beans (0.5 g), 80 g of water for extraction (a solution of 1 g of phosphoric acid and 0.03 g of 1-hydroxyethane-1,1-diphosphonic acid (HEDPO) in 1 L of ion-exchanged water) was added, and the extraction was performed by immersing for 10 minutes while maintaining the temperature of from 95 to 99°C. The supernatant was collected to obtain a coffee extract solution. The obtained coffee extract solution (1) was subjected to componential analysis. The results are shown in Table 1.
Furthermore, to the roasted coffee beans (5 g), 100 g of hot water (98°C) was added. The mixture was sufficiently stirred and filtrated by a commercially available coffee filter to obtain a coffee extract solution. The obtained coffee extract solution (2) was subjected to a sensory test. The results are shown in Table 1.

Examples 2 to 4

Roasted coffee beans were obtained in the same operation as in Example 1 except that the amount of ion exchange water added was changed as shown in Table 1. Componential analysis and sensory test of the obtained roasted coffee beans were performed in the same operation as in Example 1. The results are shown in Table 1.

Example 5

Roasted coffee beans were obtained in the same operation as in Example 1 except that starting material roasted coffee beans having an L value of 23.5 were used. Componential analysis and sensory test of the obtained roasted coffee beans were performed in the same operation as in Example 1. The results are shown in Table 1.

Examples 6 to 7

Roasted coffee beans were obtained in the same operation as in Example 5 except that the amount of ion exchange water added was changed as shown in Table 1. Componential analysis and sensory test of the obtained roasted coffee beans were performed in the same operation as in Example 5. The results are shown in Table 1.

Example 8

Roasted coffee beans were obtained in the same operation as in Example 1 except that starting material roasted coffee beans having an L value of 25.5 were used. Componential analysis and sensory test of the obtained roasted coffee beans were performed in the same operation as in Example 1. The results are shown in Table 1.

Examples 9 and 10

Roasted coffee beans were obtained in the same operation as in Example 5 except that the amount of ion exchange water added was changed as shown in Table 1. Componential analysis and sensory test of the obtained roasted coffee beans were performed in the same operation as in Example 5. The results are shown in Table 1.

Example 11

Roasted coffee beans were obtained in the same operation as in Example 3 except that starting material roasted coffee beans having an L value of 34.8 were used. Componential analysis and sensory test of the obtained roasted coffee beans were performed in the same operation as in Example 3. The results are shown in Table 1.

Examples 12 and 13

Roasted coffee beans were obtained in the same operation as in Example 6 except that the heat treatment temperature was changed as shown in Table 1. Componential analysis and sensory test of the obtained roasted coffee beans were performed in the same operation as in Example 6. The results are shown in Table 1.

Examples 14 to 16

Roasted coffee beans were obtained in the same operation as in Example 6 except that the heat treatment time was changed as shown in Table 1. Componential analysis and sensory test of the obtained roasted coffee beans were performed in the same operation as in Example 6. The results are shown in Table 1.

Comparative Example 1

Starting material roasted coffee beans having an L value of 17.5 were ground by a grinder. The ground coffee beans, which passed through a 12-mesh Tyler standard sieve and did not pass through a 115-mesh Tyler standard sieve, were collected.
Componential analysis and sensory test of the obtained roasted coffee beans were performed in the same operation as in Example 1. The results are shown in Table 1.

Comparative Example 2

Roasted coffee beans were obtained in the same operation as in Example 1 except that ion exchange water was not added. Componential analysis and sensory test of the obtained roasted coffee beans were performed in the same operation as in Example 1. The results are shown in Table 1.

Comparative Example 3

Roasted coffee beans were obtained in the same operation as in Comparative Example 1 except that starting material roasted coffee beans having an L value of 23.5 were used. Componential analysis and sensory test of the obtained roasted coffee beans were performed in the same operation as in Comparative Example 1. The results are shown in Table 1.

Comparative Example 4

Roasted coffee beans were obtained in the same operation as in Example 5 except that ion exchange water was not added. Componential analysis and sensory test of the obtained roasted coffee beans were performed in the same operation as in Example 5. The results are shown in Table 1.

Comparative Example 3

Roasted coffee beans were obtained in the same operation as in Comparative Example 1 except that starting material roasted coffee beans having an L value of 23.5 were used. Componential analysis and sensory test of the obtained roasted coffee beans were performed in the same operation as in Comparative Example 1. The results are shown in Table 1.

Comparative Example 4

Roasted coffee beans were obtained in the same operation as in Example 5 except that ion exchange water was not added. Componential analysis and sensory test of the obtained roasted coffee beans were performed in the same operation as in Example 5. The results are shown in Table 1.

Comparative Example 5

Roasted coffee beans were obtained in the same operation as in Comparative Example 1 except that starting material roasted coffee beans having an L value of 25.5 were used. Componential analysis and sensory test of the obtained roasted coffee beans were performed in the same operation as in Comparative Example 1. The results are shown in Table 1.

Comparative Example 6

Roasted coffee beans were obtained in the same operation as in Example 8 except that ion exchange water was not added. Componential analysis and sensory test of the obtained roasted coffee beans were performed in the same operation as in Example 8. The results are shown in Table 1.

[Table 1]

| | | Example | | | | | | | | | | | | | | | | Comparative Example | | | | | |
|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 1 | 2 | 3 | 4 | 5 | 6 |
| Production conditions | L value of starting material roasted coffee beans | 17.5 | 17.5 | 17.5 | 17.5 | 23.5 | 23.5 | 23.5 | 25.5 | 25.5 | 25.5 | 34.8 | 23.5 | 23.5 | 23.5 | 23.5 | 23.5 | 17.5 | 17.5 | 23.5 | 23.5 | 25.5 | 25.5 |
| | Amount of starting material roasted coffee beans used (g) | 5 | 5 | 5 | 5 | 5 | 5 | 5 | 5 | 5 | 5 | 5 | 5 | 5 | 5 | 5 | 5 | | 5 | | 5 | | 5 |
| | Amount of water added (g) | 0.02 | 0.05 | 0.1 | 0.2 | 0.05 | 0.1 | 0.2 | 0.05 | 0.1 | 0.2 | 0.1 | 0.1 | 0.1 | 0.1 | 0.1 | 0.1 | | - | | - | | - |
| | Amount of water added/amount of beans used (mass ratio) | 0.004 | 0.010 | 0.020 | 0.040 | 0.010 | 0.020 | 0.040 | 0.010 | 0.020 | 0.040 | 0.020 | 0.020 | 0.020 | 0.020 | 0.020 | 0.020 | - | - | - | - | - | - |
| | Presence or absence of airtight sealing | Present | Present | Present | Present | Present | Present | Present | Present | Present | Present | Present | Present | Present | Present | Present | Present | - | Present | - | Present | - | Present |
| | Heat treatment temperature (°C) | 125 | 125 | 125 | 125 | 125 | 125 | 125 | 125 | 125 | 125 | 125 | 105 | 145 | 125 | 125 | 125 | - | 125 | - | 125 | - | 125 |
| | Heat treatment time (hr) | 1 | 1 | 1 | 1 | 1 | 1 | 1 | 1 | 1 | 1 | 1 | 1 | 1 | 0.8 | 2 | 3 | - | 1 | - | 1 | - | 1 |
| | Water vapor partial pressure (kPa) | 19 | 49 | 96 | 194 | 49 | 96 | 194 | 49 | 96 | 194 | 96 | 92 | 102 | 96 | 96 | 96 | - | 0 | - | 0 | - | 0 |
| | Increase amount of relative humidity (%) | 8 | 20 | 41 | 82 | 20 | 41 | 82 | 20 | 41 | 82 | 41 | 39 | 43 | 41 | 41 | 41 | - | 0 | - | 0 | - | 0 |
| Roasted coffee beans | L value | 16.0 | 15.0 | 15.1 | 14.0 | 19.3 | 18.3 | 16.9 | 20.5 | 19.8 | 18.1 | 29.4 | 19.9 | 17.1 | 21.1 | 19.5 | 19.2 | - | 16.0 | - | 20.9 | - | 21.4 |
| | (A) Hydroquinone amount (mg/kg) | 31.1 | 30.6 | 31.4 | 36.7 | 11.3 | 15.4 | 27.2 | 14.2 | 20.0 | 31.8 | 9.7 | 22.0 | 19.9 | 18.8 | 20.9 | 21.0 | 18.0 | 30.1 | 7.4 | 12.0 | 5.1 | 10.4 |
| | (B) Hydroxyhydroquinone amount (mg/kg) | 39.5 | 34.1 | 22.2 | 12.3 | 32.6 | 20.6 | 12.5 | 22.2 | 16.5 | 11.1 | 23.6 | 32.9 | 3.6 | 36.2 | 13.8 | 12.5 | 223.2 | 46.1 | 161.8 | 51.0 | 126.9 | 54.2 |
| | (C) Chlorogenic acids amount (% by mass) | 0.81 | 0.81 | 0.83 | 0.84 | 2.50 | 2.48 | 2.44 | 3.06 | 3.06 | 2.98 | 4.08 | 3.01 | 3.16 | 3.01 | 3.30 | 3.36 | 0.83 | 0.80 | 2.49 | 2.49 | 3.10 | 2.82 |
| | Mass ratio (B)/(A) | 1.27 | 1.11 | 0.71 | 0.34 | 2.88 | 1.34 | 0.46 | 1.56 | 0.83 | 0.35 | 2.43 | 1.50 | 0.18 | 1.93 | 0.66 | 0.60 | 12.40 | 1.53 | 21.86 | 4.25 | 24.88 | 5.21 |
| Taste and flavor evaluation | | | | | | | | | | | | | | | | | | | | | | | |
| Unpleasant taste | | 5 | 5 | 5 | 5 | 5 | 5 | 5 | 5 | 5 | 5 | 5 | 5 | 5 | 5 | 5 | 5 | 1 | 4 | 1 | 4 | 2 | 4 |
| Body | | 4 | 4 | 5 | 5 | 4 | 4 | 5 | 4 | 5 | 5 | 4 | 4 | 5 | 4 | 5 | 5 | 3 | 5 | 3 | 4 | 3 | 4 |

Comparative Example 17

Roasted coffee beans were obtained in the same operation as in Example 9 except that the amount of ion exchange water added was changed as shown in Table 1. Componential analysis of the obtained roasted coffee beans was performed in the same operation as in Example 9 to evaluate for unpleasant taste, body and sharpness of sourness. The results are shown in Table 2 together with the results of Examples 9 and 10.

[Table 2]

| | | Example | | |
|---|---|---|---|---|
| | | 9 | 10 | 17 |
| Production conditions | L value of starting material roasted coffee beans | 25.5 | 25.5 | 25.5 |
| | Amount of starting material roasted coffee beans used (g) | 5 | 5 | 5 |
| | Amount of water added (g) | 0.1 | 0.2 | 0.4 |
| | Amount of water added/amount of beans used (mass ratio) | 0.020 | 0.040 | 0.080 |
| | Presence or absence of airtight sealing | Present | Present | Present |
| | Heat treatment temperature (°C) | 125 | 125 | 125 |
| | Heat treatment time (hr) | 1 | 1 | 1 |
| | Water vapor partial pressure (kPa) | 96 | 194 | 387 |
| | Increase amount of relative humidity (%) | 41 | 82 | 164 |
| Roasted coffee beans | L value | 19.8 | 18.1 | 14.9 |
| | (A) Hydroquinone amount (mg/kg) | 20.0 | 31.8 | 55.3 |
| | (B) Hydroxyhydroquinone amount (mg/kg) | 16.5 | 11.1 | 5.0 |
| | (C) Chlorogenic acids amount (% by mass) | 3.06 | 2.98 | 2.88 |
| | Mass ratio (B)/(A) | 0.83 | 0.35 | 0.09 |
| Taste and flavor evaluation | | | | |
| Unpleasant taste | | 5 | 5 | 5 |
| Body | | 5 | 5 | 5 |
| Sharpness of sourness | | 5 | 4 | 3 |

From Tables 1 and 2, it is found that roasted coffee beans useful as a starting material for a coffee beverage having rich body, suppressed in unpleasant taste and reduced in the amount of hydroxyhydroquinone are obtained by placing starting material roasted coffee beans in a humidified airtight container and subjecting the roasted coffee beans to a heat treatment at from 100 to 160°C. From Table 2, it is found that if the mass ratio of the amount of water added relative to starting material roasted coffee beans is 0.06 or less, sharpness of sourness is satisfactory.

Claims

1. A method for producing roasted coffee beans, comprising placing starting material roasted coffee beans in an airtight container, sealing the container, the atmosphere in the container either being atmospheric air or an inert gas, and subjecting the roasted coffee beans to a heat treatment at from 100 to 160°C under humidified conditions, wherein water is added in an amount as a mass ratio of from 0.001 to 0.06 relative to the starting material roasted coffee beans to humidify an interior of the airtight container.

2. A method for producing roasted coffee beans, comprising placing starting material roasted coffee beans in an airtight container, sealing the container, the atmosphere in the container either being atmospheric air or an inert gas, and subjecting the roasted coffee beans to a heat treatment at from 100 to 160°C under humidified conditions, wherein a water vapor partial pressure in the airtight container at a heating condition is 10 kPa or more and 300 kPa or less.

3. A method for producing roasted coffee beans, comprising placing starting material roasted coffee beans in an airtight container, sealing the container, the atmosphere in the container either being atmospheric air or an inert gas, and subjecting the roasted coffee beans to a heat treatment at from 100 to 160°C under humidified conditions, wherein an amount of increase in relative humidity in the airtight container at a heating condition is 5% or more and 95% or less.

4. The method for producing roasted coffee beans according to any one of Claims 1 to 3, wherein a ratio of mass (g) of the starting material roasted coffee beans to be placed in the airtight container relative to an internal volume (cm$^3$) of the airtight container is 0.005 g/cm$^3$ or more and 0.25 g/cm$^3$ or less.

5. The method for producing roasted coffee beans according to any one of Claims 1 to 4, wherein a heating time is from 0.5 to 4 hours.

6. The method for producing roasted coffee beans according to any one of Claims 1 to 5, wherein an L value of the starting material roasted coffee beans is higher by 1 or more than a desired L value of the roasted coffee beans.

7. The method for producing roasted coffee beans according to any one of Claims 1 to 6, wherein the L value of the starting material roasted coffee beans is from 10 to 40.

8. The method for producing roasted coffee beans according to according to any one of Claims 1 to 7, wherein starting material roasted coffee beans are ground.

9. The method for producing roasted coffee beans according to any one of Claims 1 to 8, wherein a content of hydroxyhydroquinone in the obtained roasted coffee beans is 40 mg or less per kg of the roasted coffee beans.

10. The method for producing roasted coffee beans according to any one of Claims 1 to 9, wherein a content of hydroquinone in the obtained roasted coffee beans is 10 mg or more per kg of the roasted coffee beans.

11. The method for producing roasted coffee beans according to any one of Claims 1 to 10, wherein the obtained roasted coffee beans have a mass ratio of (A) hydroquinone and (B) hydroxyhydroquinone, [(B)/(A)], of 3 or less.

12. The method for producing roasted coffee beans according to any one of Claims 1 to 11, wherein a content of chlorogenic acids in the obtained roasted coffee beans is 0.5% by mass or more.

**Patentansprüche**

1. Verfahren zur Herstellung von gerösteten Kaffeebohnen, umfassend das Einbringen von einem gerösteten Kaffeebohnen-Ausgangsmaterial in einen luftdichten Behälter, das Verschließen des Behälters, wobei die Atmosphäre in dem Behälter entweder atmosphärische Luft oder ein Inertgas ist, und eine Wärmebehandlung der gerösteten Kaffeebohnen bei 100 bis 160°C unter befeuchteten Bedingungen, wobei Wasser in einer Menge als Massenverhältnis von 0,001 bis 0,06 relativ zu dem gerösteten Kaffeebohnen-Ausgangsmaterial zugesetzt wird, um einen Innenraum des luftdichten Behälters zu befeuchten.

2. Verfahren zur Herstellung von gerösteten Kaffeebohnen, umfassend das Einbringen von einem gerösteten Kaffeebohnen-Ausgangsmaterial in einen luftdichten Behälter, das Verschließen des Behälters, wobei die Atmosphäre in dem Behälter entweder atmosphärische Luft oder ein Inertgas ist, und eine Wärmebehandlung der gerösteten Kaffeebohnen bei 100 bis 160°C unter befeuchteten Bedingungen, wobei ein Wasserdampfpartialdruck in dem luftdichten Behälter im Zustand des Erwärmens 10 kPa oder mehr und 300 kPa oder weniger beträgt.

3. Verfahren zur Herstellung von gerösteten Kaffeebohnen, umfassend das Einbringen von einem gerösteten Kaffeebohnen-Ausgangsmaterial in einen luftdichten Behälter, das Verschließen des Behälters, wobei die Atmosphäre in dem Behälter entweder atmosphärische Luft oder ein Inertgas ist, und eine Wärmebehandlung der gerösteten Kaffeebohnen bei 100 bis 160°C unter befeuchteten Bedingungen, wobei ein Anstieg der relativen Feuchtigkeit in dem luftdichten Behälter im Zustand des Erwärmens 5% oder mehr und 95% oder weniger beträgt.

**4.** Verfahren zur Herstellung von gerösteten Kaffeebohnen gemäß einem der Ansprüche 1 bis 3, wobei ein Massenverhältnis (g) von dem gerösteten Kaffeebohnen-Ausgangsmaterial, das in den luftdichten Behälter eingebracht werden soll, relativ zu einem Innenvolumen ($cm^3$) des luftdichten Behälters 0,005 $g/cm^3$ oder mehr und 0,25 $g/cm^3$ oder weniger ist.

**5.** Verfahren zur Herstellung von gerösteten Kaffeebohnen gemäß einem der Ansprüche 1 bis 4, wobei die Erwärmungszeit 0,5 bis 4 Stunden beträgt.

**6.** Verfahren zur Herstellung von gerösteten Kaffeebohnen gemäß einem der Ansprüche 1 bis 5, wobei ein L-Wert des gerösteten Kaffeebohnen-Ausgangsmaterials um 1 oder mehr höher als ein gewünschter L-Wert der gerösteten Kaffeebohnen ist.

**7.** Verfahren zur Herstellung von gerösteten Kaffeebohnen gemäß einem der Ansprüche 1 bis 6, wobei der L-Wert des gerösteten Kaffeebohnen-Ausgangsmaterials 10 bis 40 beträgt.

**8.** Verfahren zur Herstellung von gerösteten Kaffeebohnen gemäß einem der Ansprüche 1 bis 7, wobei das geröstete Kaffeebohnen-Ausgangsmaterial gemahlen wird.

**9.** Verfahren zur Herstellung von gerösteten Kaffeebohnen nach einem der Ansprüche 1 bis 8, wobei der Gehalt an Hydroxyhydrochinon in den erhaltenen gerösteten Kaffeebohnen 40 mg oder weniger pro kg gerösteter Kaffeebohnen beträgt.

**10.** Verfahren zur Herstellung von gerösteten Kaffeebohnen gemäß einem der Ansprüche 1 bis 9, wobei der Gehalt an Hydrochinon in den erhaltenen gerösteten Kaffeebohnen 10 mg oder mehr pro kg gerösteter Kaffeebohnen beträgt.

**11.** Verfahren zur Herstellung von gerösteten Kaffeebohnen gemäß einem der Ansprüche 1 bis 10, wobei die erhaltenen gerösteten Kaffeebohnen ein Massenverhältnis von (A) Hydrochinon und (B) Hydroxyhydrochinon, [(B)/(A)], von 3 oder weniger aufweisen.

**12.** Verfahren zur Herstellung von gerösteten Kaffeebohnen gemäß einem der Ansprüche 1 bis 11, wobei der Gehalt an Chlorogensäuren in den erhaltenen gerösteten Kaffeebohnen 0,5 Massen-% oder mehr beträgt.

**Revendications**

**1.** Procédé pour produire des grains de café torréfiés, consistant à placer une matière première de grains de café torréfiés dans un récipient étanche à l'air, à fermer hermétiquement le récipient, l'atmosphère dans le récipient étant soit de l'air ambiant soit un gaz inerte, et à soumettre les grains de café torréfiés à un traitement thermique à une température comprise entre 100 et 160 °C dans un état humidifié, dans lequel de l'eau est ajoutée en une certaine quantité selon un rapport en masse de 0,001 à 0,6 par rapport à la matière première de grains de café torréfiés pour humidifier un intérieur du récipient étanche à l'air.

**2.** Procédé pour produire des grains de café torréfiés, consistant à placer une matière première de grains de café torréfiés dans un récipient étanche à l'air, à fermer hermétiquement le récipient, l'atmosphère dans le récipient étant soit de l'air ambiant soit un gaz inerte, et à soumettre les grains de café torréfiés à un traitement thermique à une température comprise entre 100 et 160 °C dans un état humidifié, dans lequel une pression partielle de vapeur d'eau dans le récipient étanche à l'air à l'état de chauffage est supérieure ou égale à 10 kPa et inférieure ou égale à 300 kPa.

**3.** Procédé pour produire des grains de café torréfiés, consistant à placer une matière première de grains de café torréfiés dans un récipient étanche à l'air, à fermer hermétiquement le récipient, l'atmosphère dans le récipient étant soit de l'air ambiant soit un gaz inerte, et à soumettre les grains de café torréfiés à un traitement thermique à une température comprise entre 100 et 160 °C dans un état humidifié, dans lequel une quantité d'augmentation de l'humidité relative dans le récipient étanche à l'air à l'état de chauffage est supérieure ou égale à 5 % et inférieure ou égale à 95 %.

**4.** Procédé pour produire des grains de café torréfiés selon l'une quelconque des revendications 1 à 3, dans lequel un rapport de masse (g) entre la matière première des grains de café torréfiés à placer dans le récipient étanche à l'air et un volume interne (cm$^3$) du récipient étanche à l'air est supérieur ou égal à 0,005 g/cm$^3$ et inférieur ou égal à 0,25 g/cm$^3$.

5. Procédé pour produire des grains de café torréfiés selon l'une quelconque des revendications 1 à 4, dans lequel une durée de chauffage va de 0,5 à 4 heures.

6. Procédé pour produire des grains de café torréfiés selon l'une quelconque des revendications 1 à 5, dans lequel une valeur L de la matière première des grains de café torréfiés est supérieure d'au moins 1 à une valeur L désirée des grains de café torréfiés.

7. Procédé pour produire des grains de café torréfiés selon l'une quelconque des revendications 1 à 6, dans lequel la valeur L de la matière première des grains de café torréfiés va de 10 à 40.

8. Procédé pour produire des grains de café torréfiés selon l'une quelconque des revendications 1 à 7, dans lequel la matière première des grains de café torréfiés est moulue.

9. Procédé pour produire des grains de café torréfiés selon l'une quelconque des revendications 1 à 8, dans lequel une teneur en hydroxyhydroquinone dans les grains de café torréfiés obtenus est inférieure ou égale à 40 mg par kg des grains de café torréfiés.

10. Procédé pour produire des grains de café torréfiés selon l'une quelconque des revendications 1 à 9, dans lequel une teneur en hydroquinone dans les grains de café torréfiés obtenus est supérieure ou égale à 10 mg par kg des grains de café torréfiés.

11. Procédé pour produire des grains de café torréfiés selon l'une quelconque des revendications 1 à 10, dans lequel les grains de café torréfiés obtenus ont un rapport de masse entre (A) l'hydroquinone et (B) l'hydroxyhydroquinone, [(B)/(A)], inférieur ou égal à 3.

12. Procédé pour produire des grains de café torréfiés selon l'une quelconque des revendications 1 à 11, dans lequel une teneur en acides chlorogéniques dans les grains de café torréfiés obtenus est supérieure ou égale à 0,5 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011055716 A
- WO 2005011396 A
- EP 1654935 A
- JP 2012183035 A
- WO 2011122660 A
- US 3244532 A
- US 3132947 A
- US 3620758 A
- EP 0755631 A
- EP 2233012 A